# EUROPEAN PATENT APPLICATION

(11) **EP 0 937 908 A2**
(43) Date of publication of application: **25.08.1999**
(21) Application number: 99102117.1
(22) Date of filing: 03.02.1999
(51) Int. Cl.: F16F 9/46

(54) **Hydroneumatic damper**

(30) Priority: 18.02.1998 IT BO980089
(71) Applicant: Marzocchi S.p.A., 40069 Lavino di Zola Predosa (Bologna) (IT)
(72) Inventor: Marzocchi, Paolo, 40135 Bologna (IT); Vignocchi, Loris, 40069 Zola Predosa (Bologna) (IT); Musiani, Sandro, 40043 Marzabotto (Bologna) (IT)
(74) Representative: Porsia, Dino, Dr.

(57) **Abstract**

The stem (7) of the damper is closed at the inward end by a piston (9) through which there passes, with a lateral seal, a tube (13) fixed at one end to the end wall (3) of the sheath (1) of the said damper, the other end of which carries a piston (22) that slides in a laterally sealed manner inside the stem. Interposed between the two pistons are end stop means (28). Mounted on the piston which is connected to the tube are a one-way valve (122, 25, 26) that is open on the compression stroke of the system, and a branched-off valve (29, 30) which is adjustable by means of a rod (30) positioned inside the said tube, and by means of an adjustment screw (31) projecting from the end wall (3) of the sheath. The end chamber (A) of the sheath (1) is occupied by pressurized gas giving the damper the springiness required for the extension stroke and for resisting the compression stroke. The intermediate chamber (B) between the two pistons (9, 22) is full of liquid, while the end chamber (C) of the stem contains gas at atmospheric pressure and a small amount of liquid lying against the adjacent piston (22) and optionally separated from the gas by a floating piston (38).

## Description

The invention relates to a hydropneumatic damper that can be adjusted for the degree of braking in extension and in the elastic reaction during compression and is particularly suitable for forming, in combination with an identical damper, the telescopic legs of a fork for a mountain bike or other means of transport having similar requirements, so that the fork itself can be adapted to the varying conditions of use of the means of transport. The damper according to the invention is distinguished from known solutions by a reduced number of components, a lower weight due to the absence of opposing steel springs, and a reduced amount of liquid in the hydraulic circuit, and is characterized by its great ease of assembly and disassembly.

The features of the invention and the advantages procured thereby will be obvious from the following description of a preferred embodiment thereof, illustrated by way of non-restrictive example, in the figures of the attached sheets of drawings, in which:
- Fig. 1 illustrates the damper in longitudinal section and in the position of maximum extension;
- Fig. 2 is a perspective view of a sliding bush positioned between the sheath and the stem of the damper;
- Figs. 3 and 4 illustrate details of the operation of the damper viewed in longitudinal section, in compression and extension, respectively.

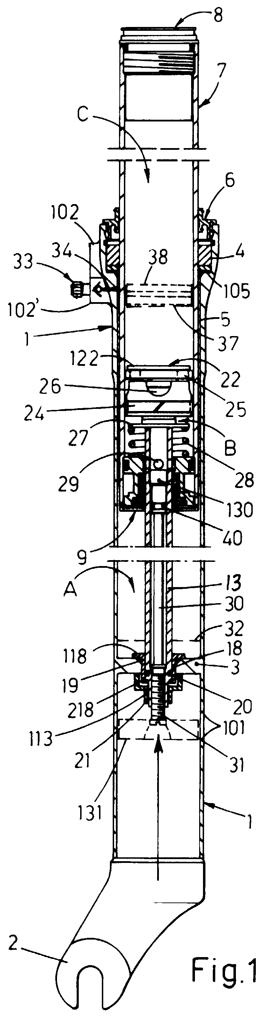

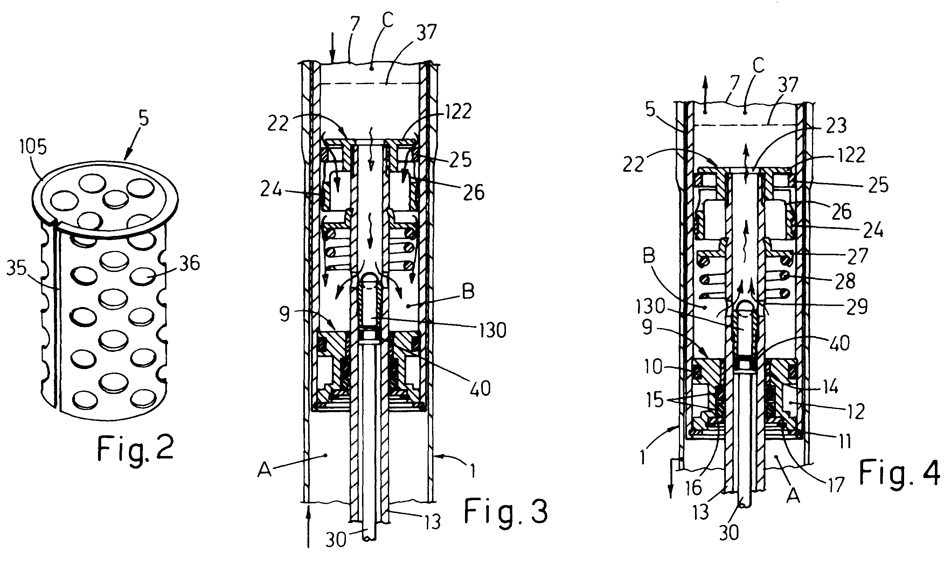

As can he seen in Figs. 1 and 4, the damper comprises a sheath 1 which, for the formation of a leg of a fork for a mountain bike, is e.g. closed at the lower end by a raised end wall 3 (see below), is provided with a lower appendage 2 in the form of a fork or bush and is optionally provided in the lower lateral region with additional appendages (not shown) to support the calliper of a disc brake. The sheath 1 carries at its upper end other appendages of known type (indicated in part at 102, for connection by a bridge to the sheath of the other leg of the fork and for support for an optional brake with acts on the wheel rim) and ends at the top in an enlarged part having a seat 4 of diameter greater than that of the internal cavity of the sheath itself and on the bottom of which rests the upper collar 105 of a thin bush 5 (Fig. 2) which is externally of metal and internally of teflon (see below) and lines the sheath for approximately half its length. Mounted on the collar of this bush is the known closing and sealing assembly 6 with the function of wiping off dust. Sliding axially inside the sheath 1 with lateral leaktightness by means of the abovementioned assembly 5-6, is the round-sectioned stem 7, which is sealed at the top by a cap 8 and which in order to form the fork is designed as is known for attachment to the axial pin of the bicycle's steering system by means of a crossmember (not shown) which in turn is designed for connection to the stem of an identical telescopic system parallel to that described here.

The lower end of the stem 7, see also Fig. 4, contains a wider internal space in which a piston 9 with external weight reduction 12 is mounted with lateral sealing by the seal 10 and is fixed axially by the elastic ring 11. The piston 9 is axially hollow and through it there passes with lateral sealing a tube 13 whose lower end is fixed to the end wall 3 of the sheath 1. The axial cavity of the piston 9 is divided into three sections whose diameters increase in the downward direction. In the top section of smallest diameter a bush 14 made of a material with a low coefficient of friction is press-fitted, with the tube 13 running through it, while the intermediate section of the said cavity contains seals 15, and a washer 16 with an elastic ring 17 to keep the said seals in place is mounted in the bottom section of the same cavity.

The tube 13 is fixed to the end wall 3 in, for example, the following way. The end wall 3 contains an axial through hole in which is mounted a bush 18 with its collar 118 resting on the end wall through an intermediate seal 19 and having a constriction 218 on its bottom end. The tube 13 is fitted accurately in the bush 18 with a lateral seal 20 in such a way as to project from the bottom of the said bush in the form of a narrowed, externally threaded section 113, on which is screwed a cup 21 which reacts against the end wall 3 and keeps the bush 18 and the tube 13 axially in position.

Mounted coaxially on the upper end of the tube 13 is a piston 22 in the shape of an upside-down wine glass whose waist is axially hollow as indicated at 23, the said tube 13 being screwed into this. An annular seal 24 is fitted around the outside of the body of the piston 22 and acts on the inside lateral surface of the stem 7. The waist of the piston 22 is surrounded with play by a sufficiently rigid ring 25 which forms a seal against the inside lateral surface of the stem 7 and which, when the latter is extended out of the sheath 1 (Fig. 4), abuts against and seals the head 122 of this piston, which has an external diameter smaller than the internal diameter of the stem 7. On the other hand, when the stem 7 enters the sheath 1, as in Fig. 3, the ring 25 comes off the head 122 of the piston 22 and rests against the body of the same piston, where angularly equidistant apertures 26 which remain uncovered by the said ring 25 are provided.

Fixed to the tube 13 immediately beneath the piston 22 is a cup 27 on which a helical cylindrical spring 28, or other equivalent elastic means, presses and is fixed by its first turn, so as to act as an end stop for the piston 9 when the stem 7 reaches its fully extended position as in Fig. 1. In this condition according to the invention a series of holes 29 located around the tube 13 are inside the bush 14. The openings of the holes 29 may be intercepted by a variable amount by the closure member 130 on the end of a rod 30 sealed inside the tube 13 by means of a seal 14, and the same rod extends downwards until its lower end rests on an adjustment screw 31 screwed onto the lower end of the tube 13. It is preferable for the seat at the end of the tube in which the screw 31 is screwed to be of a smaller diameter than the cavity of the same tube that houses the rod 30, so as to form a shoulder against which this rod 30 bears in the case in which the screw 31 is completely unscrewed from its seat.

In order that the axial position of the closure member 130 relative to the holes 29 can be observed from the outside, the screw 31 may be provided with an add-on head 131, as indicated with broken lines in Fig. 1. This will appear through a hole or slot 101 provided in the sheath 1 or may project from the bottom end of the sheath and the said head 131 may carry index markers which, viewed against external references on the sheath, indicate the axial position of the closure member 130. Means which may be devised by those skilled in the art may also be provided to allow indexed rotation of the head 131 for the additional purpose of stabilizing the screw 31 in the position to which it is moved from time to time.

Thus constructed, the telescopic assembly includes a lower pressure chamber A defined by the end wall 3, by the piston 9, by the tube 13 and by the sheath 1, in which a small amount of lubricant, as indicated by the level 32 in Fig. 1, can be introduced. Pressurized gas is introduced into the chamber A through an inflation valve 33 fitted for example to an appendage 102' at the top of the sheath 1 and which through the admission channel 34 communicates with a longitudinal aperture 35 in the bush 5, which among other things has weight-reducing holes 36, staggered in a honeycomb arrangement, in which oil-saturated air is trapped so as to contribute to the lubrication of the sliding surface between bush 5 and stem 7. This is because the small amount of oil contained in the chamber A tends to emulsify in the compressed gas contained in this chamber. The pressure of the gas in the chamber A constitutes the elastic means, in opposition to which the stem 7 moves as it retracts into the sheath 1 and which then causes the stem to extend when the compressive stress on the telescopic system is removed.

The damper is provided with an intermediate pressure chamber B defined by the pistons 9 and 22 and by the lateral surface of the stem 7, and, lastly, contains an upper chamber C which, like chamber B, is initially at atmospheric pressure. Before the cap 8 is closed a quantity of oil is introduced into chamber C sufficient to completely fill chamber B and occupy a small amount of chamber C, as indicated for example in Figure 1 by the level line 37. The oil passes out of chamber C to chamber B through the apertures 26 in the piston 22 and through the holes 29 when these are outside of the bush 14.

In order for the present assembly to be able to function correctly even when not upright as in Figure 1, the space occupied by the oil in chamber C can be divided from the remaining space occupied by the air, by a floating piston 38 forming a lateral seal with the stem 7, as indicated in Figure 1 in broken lines.

The operation of the damper as described is simple and obvious. When the damper is compressed and the stem 7 enters the sheath 1, the intermediate chamber B increases in volume, while the end chambers A and C diminish in volume. The oil contained in chamber C passes freely into chamber B through the apertures 26 of the piston 22 (Fig. 3) and through the openings of the holes 29 not closed by the throttle 130. The reduction in the volume of chamber A causes a further increase in the pressure of the gas introduced into it, which opposes the current compression stroke. By varying the pressure of the gas in chamber A the user will be able to adapt the hardness of the damper on the compression stroke to his or her own requirements.

On the extension stroke of the damper, when the compressive stresses are removed, the pressure of the gas in chamber A drives the stem 7 out of the sheath 1, chambers A and C increase in volume, while the intermediate chamber B diminishes in volume. The oil contained in chamber B is now able to return into the upper chamber C only through the unoccupied openings of the holes 29, as the passage through the apertures 26 of the piston 22 is closed by the ring 25 which is resting on the head 122 of this piston, as shown in Figure 4. By varying the unoccupied openings of the holes 29, the user will be able to adapt the degree of braking of the damper during extension.

The use of the floating piston 38 to separate the oil from the air in chamber C allows the damper to operate even upside down, so that the scope of protection of the present patent application also includes a telescopic fork in which the wheel axle is connected to the free lower end of the stem, while the crossmember with the steering pin is connected to the free upper end of the sheath 1. This has the advantage that the adjustment screw 31 is at the top and that the oil in chamber C is against the piston 9 and therefore in the best position to lubricate the latter as it slides relative to the tube 13 and the stem as it slides relative to the bush 5. The inflation valve 33 may in this case be located in the region of the end wall 3 and the bush 5 need not have the longitudinal slit 35.

The scope of the invention also includes the modification whereby pressure is generated in chamber C not by gas but by a spring or by an assembly of elastomers or by equivalent means.

## Claims

1. Hydropneumatic damper of the type that comprises a sheath (1) closed at one end by which it is connected to one of the points of the mechanism to be damped, while a stem (7) closed at its outward end slides telescopically in the other end of the same sheath and is connected to the other point of the mechanism to be damped, and in which elastic means are provided to extend the said telescopic assembly, comprising internal chambers filled by gas and by liquid constructed so that on extension stroke of the damper the liquid passes through valve braking means,
characterized by the fact that
- coaxially to the end wall of the sheath thether is fixed the end of a tube (13) which passes through a first piston (9) fixed to the inward end of the stem and which carries on its other end a second piston (22) which slides inside the said stem, in such a way that the internal space of the damper is divided into three pressure chambers (A, B, C);
- a suitable damping end stop (27, 28) is interposed between the said two pistons;
- in the sheath end chamber (A) containing the said tube (13), there are provided elastic means tending to extend the said telescopic assembly;
- the intermediate chamber (B) defined inside the stem by the said two pistons (9, 22) is filled with a suitable liquid;
- the stem (7) end chamber (C) is partly occupied by a quantity of the same liquid as the intermediate chamber and partly occupied by gas at atmospheric pressure or at low pressure and the said quantity of liquid lies against the piston (22) attached to the said tube; and
- inside the piston (22) that slides inside the stem (7) there is mounted at least one one-way valve means (25-26) which opens on the compression stroke of the damper to allow the liquid to move from the end chamber (C) to the intermediate chamber (B) but which is closed on the extension stroke, and, on the same piston, branched from the said one-way valve, there is arranged a variable throttle whose moveable closure member (130) is attached to the end of a rod (30) positioned axially inside the said tube, while at its other end there is an adjustment screw (31) positioned on the end of the said tube and projecting from the end wall (3) of the sheath so that an operator can vary the through openings of the variable throttle.

2. Damper according to Claim 1, characterized in that the liquid contained in the end chamber (C) of the stem (7) is separated from the air contained in the same stem by a floating piston (38) or by a diaphragm.

3. Damper according to Claim 1, in which the sheath end chamber (A) contains a small quantity of lubricant the sliding movement between the said tube (13) and the piston (9) on the end of the stem (7) and between this stern and a sliding bush (5) that partly lines the inside surface of the sheath and that is fixed by its end collar (105) in the end seat (4) of this sheath.

4. Damper according to Claim 3, in which the bush (5) positioned between the sheath and the stem contains holes (36) to enable a uniform distribution of the lubricant around the stem.

5. Damper according to claim 1, in which the elastic means situated in the end chamber (A) of the sheath, which assist the damper to extend when the compressive stress is removed, consist of a pressurized gas introduced into this chamber through an inflation valve (33).

6. Damper according to Claim 5, characterized in that the inflation valve (33) is located in an upper enlargement (102') of the sheath, and the admission channel (34) of the said valve connects with a longitudinal slot (35) in the sliding bush (5) situated between the sheath and the stem, allowing communication between the said valve and the end chamber (A) of the sheath.

7. Damper according to Claim 5, characterized in that the inflation valve (33-34) is located on the closed end (3) of the sheath (1), from which the said adjustment screw (31) projects.

8. Damper according to the claim 1, in which the said adjustment screw (31) is fitted with a head (131) having means of stabilizing it in the angular position and means for revealing the angular and axial position of the said screw, the said head being visible in its entirety or at least through an aperture (101) provided on the lateral surface of the sheath (1) if this extends beyond the pressure chamber (A) of the sheath.

9. Damper according to claim 1, in which the second piston (22) fixed to the free end of the said tube (13) is axially hollow and this tube is provided, at a short distance from the said piston, with holes (29) that open into the intermediate chamber (B) of the said damper and the through openings of these holes are interceptable by the end (130) of the rod (30), the latter being axially mobile inside the said tube, being fitted with a lateral seal (40) and being connected to the adjustment screw (31).

10. Damper according to Claim 9, characterized in that when it is in the position of rest or maximum extension, the said holes (29) of the tube (13), which form the openings of the variable throttle, enter the axial cavity of the piston (9) of the stem (7), to form a hydraulic brake which brings the damper gently to rest at the end of the extension stroke.

11. Damper according to claim 1, in which the piston (22) fixed to the end of the tube (13) is in the shape of an inverted wine glass and the tube enters the body of this piston and is screwed into its axially hollow and threaded waist (23), the body of the piston being provided with an external seal (24) for a lateral sealing action on the stem (7) and being provided at the base with equidistant through apertures (26), the waist of this piston being surrounded with play by at least one sufficiently rigid ring (25) which has a sealing action on the stem (7) and which, when the damper is compressed, rests on the base of the said piston (22), allowing the liquid to pass through the opening existing between the top (122) of the piston (22) and the stem (7) and through the said apertures in the base (26) of the said piston, whereas when the damper is extending, the said ring (25) rests against the top (122) of the piston and prevents liquid from passing through the opening existing between this top and the stem (7).

12. Damper according to claim 1, in which the first piston (9) fixed to the inward end of the stem (7) is housed in an enlarged seat at the end of this stem, in which it is inserted with an external lateral seal (10) and in which it is locked axially by an elastic ring (11), the axial cavity of the said piston comprising three sections whose diameters increase with distance from the piston (22) connected to the sheath, a sliding bush (14) being pressed into the section of smallest diameter for the tube (13) carrying the said piston (22), while the intermediate section of the said cavity houses seals (15) for lateral sealing against the said tube, and a washer (16) and an elastic ring (17) are mounted on the section of greatest diameter of the said cavity in order to keep the said seals in place.

13. Damper according to claim 1, in which the tube (13) which is held axially inside the sheath (1), terminates at the opposite end from that carrying the piston (22) with a narrowed and externally threaded section (113) that projects from the open end wall (218) of a bush (18) in which this end of the tube is accurately inserted with an intermediate lateral seal (20) and this bush is inserted in an axial hole formed in the closing end wall (3) of the sheath, which bush rests via its end collar (118) and an intermediate seal (19) on the inside face of this end wall, the assembly formed by the bush and rod being fastened to the end wall by screwing a cup (21) onto the threaded projecting section of the tube, the cup resting and reacting on the outside face of the end wall (3).

14. Damper according to claim 1, in which the tube (13) ends in an internal threaded constriction on the narrowed and externally threaded end (113), against which internal constriction rests the end of the rod (13) with the closure member (130) of the variable throttle (130, 29), the adjustment screw (31) being screwed into the same internal constriction.
